# EUROPEAN PATENT APPLICATION

(11) **EP 4 580 277 A1**
(43) Date of publication of application: **02.07.2025**
(21) Application number: 22956005.7
(22) Date of filing: 24.08.2022
(51) Int. Cl.: H04W 72/04

(54) **PACKET DATA CONVERGENCE PROTOCOL (PDCP) ENTITY PROCESSING METHOD AND APPARATUS, INFORMATION SENDING METHOD AND APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Stöckeler, Ferdinand
(86) International application number: PCT/CN2022/114429
(87) International publication number: WO 2024/040456

(57) **Abstract**

The present application relates to the field of mobile communications. Disclosed are a packet data convergence protocol (PDCP) entity processing method and apparatus, an information sending method and apparatus, and a storage medium. The PDCP entity processing method comprises: when an inactive multicast service is received, retaining a PDCP entity. The embodiments of the present application provide a solution for processing a PDCP entity by means of a terminal, such that the terminal can still receive an inactive multicast service normally even when it is determined that the inactive multicast service needs to be received, thereby not only ensuring the transmission of the inactive multicast service, but also ensuring the reliability of communication.

## Description

### TECHNICAL FIELD

The disclosure relates to the field of mobile communication, and in particular to a packet data convergence protocol (PDCP) entity processing method, an information sending method, an apparatus and a storage medium.

### BACKGROUND

A multicast service is provided in mobile communication systems, and a terminal in a connected state receives the multicast service. However, when the terminal switches from the connected state to an inactive state, a packet data convergence protocol (PDCP) entity will be will suspended or released, resulting in the inability to receive the multicast service. Therefore, there is an urgent need for a method for the terminal in the inactive state to receive the multicast service.

### SUMMARY

In view of this, the embodiments of the disclosure propose a packet data convergence protocol (PDCP) entity processing method, an information sending method, an apparatus and a storage medium, which not only ensures a transmission of an inactive multicast service, but also ensures a reliability of communication. The technical solution is as follows.

According to a first aspect of embodiments of the disclosure, a packet data convergence protocol (PDCP) entity processing method is provided. The method is performed by a terminal, and includes:
in a case of receiving an inactive multicast service, withholding suspending a PDCP entity.

According to a second aspect of embodiments of the disclosure, an information sending method is provided. The method is performed by a network device, and the method includes:
sending first indication information to a terminal, in which the first indication information is used for configuring the terminal to receive an inactive multicast service and/or to switch from a connected state to an inactive state.

According to a third aspect of embodiments of the disclosure, a PDCP entity processing method is provided. The method is performed by a terminal, and the method includes:
in a case of stopping receiving an inactive multicast service, suspending or releasing a PDCP entity.

According to a fourth aspect of embodiments of the disclosure, a PDCP entity processing apparatus is provided, and the apparatus includes:
a processing module, configured to retain, in a case of receiving an inactive multicast service, a PDCP entity.

According to a fifth aspect of embodiments of the disclosure, an information sending apparatus is provided, and the apparatus includes:
a sending module, configured to send first indication information to a terminal, in which the first indication information is used for configuring the terminal to receive an inactive multicast service and/or to switch from a connected state to an inactive state.

According to a sixth aspect of embodiments of the disclosure, a PDCP entity processing apparatus is provided, and the apparatus includes:
a processing module, configured to suspend or release, in a case of stopping receiving an inactive multicast service, a PDCP entity.

According to a seventh aspect of embodiments of the disclosure, a terminal is provided, and the terminal includes: a processor; a transceiver connected to the processor; and a memory for storing executable instructions of the processor. The processor is configured to load and execute the executable instructions to implement the PDCP entity processing method of the above aspects.

According to an eighth aspect of embodiments of the disclosure, a network device is provided, and the network device includes: a processor; a transceiver connected to the processor; and a memory for storing executable instructions of the processor. The processor is configured to load and execute the executable instructions to implement the information sending method of the above aspects.

According to a ninth aspect of embodiments of the disclosure, a communication system is provided. The communication system includes a terminal and a network device, in which the terminal is configured to implement the PDCP entity processing method according to the first aspect or the third aspect of the embodiments, and the network device is configured to implement the information sending method according to the second aspect of the embodiments.

According to a tenth aspect of embodiments of the disclosure, a computer-readable storage medium is provided, which stores an executable program code, in which the executable program code is loaded and executed by a processor to implement the PDCP entity processing method or the information sender method of the above aspects.

According to the eleventh aspect of the present application, a chip is provided. The chip includes a programmable logic circuit and/or program instructions. When the chip is run on a terminal or network device, the chip is configured for implementing the PDCP entity processing methods or the information transmission methods of the above aspects.

According to the twelfth aspect of the present application, a computer program product is provided. When the computer program product is executed by a processor of a terminal or network device, the computer program product is configured for implementing the PDCP entity processing method or the information transmission method of the above aspects.

The disclosure provides a solution for a terminal to process the PDCP entity, so that the terminal may still receive the inactive multicast service normally in a case where the terminal determines that the inactive multicast service is needed to be received, which not only ensures the transmission of the inactive multicast service, but also ensures the reliability of communication.

### BRIEF DESCRIPTION OF THE DRAWINGS

In order to more clearly illustrate technical solutions in embodiments of the disclosure, the drawings required for use in the description of the embodiments will be briefly introduced below. Obviously, the drawings described below are only some embodiments of the disclosure. For those skilled in the art, other drawings may be obtained based on these drawings without inventive work.
FIG. 1 is a block diagram of a communication system according to an exemplary embodiment of the disclosure.
FIG. 2 is a flowchart of a packet data convergence protocol (PDCP) entity processing method according to an exemplary embodiment of the disclosure.
FIG. 3 is a flowchart of a PDCP entity processing method according to an exemplary embodiment of the disclosure.
FIG. 4 is a flowchart of a PDCP entity processing method according to another exemplary embodiment of the disclosure.
FIG. 5 is a block diagram of a PDCP entity processing apparatus according to an exemplary embodiment of the disclosure.
FIG. 6 is a block diagram of a PDCP entity processing apparatus according to another exemplary embodiment of the disclosure.
FIG. 7 is a block diagram of an information sending apparatus according to an exemplary embodiment of the disclosure.
FIG. 8 is a block diagram of a PDCP entity processing apparatus according to an exemplary embodiment of the disclosure.
FIG. 9 is a schematic diagram of a communication device according to an exemplary embodiment of the disclosure.

### DETAILED DESCRIPTION

In order to clarify the purpose, technical solution, and advantages of the disclosure, a further detailed description of implementations of the disclosure will be provided below in conjunction with the accompanying drawings

The technical solutions in the embodiments of the disclosure will be clearly and completely described below in combination with the drawings in the embodiments of the disclosure. Obviously, the described embodiments are only part of the embodiments of the disclosure, rather than all the embodiments. Based on the embodiments in the disclosure, all other embodiments obtained by those skilled in the art without inventive work shall fall within the scope of protection of the disclosure.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining".

It should be noted that the information (including but not limited to user equipment (UE) information, user personal information, etc.), data (including but not limited to data used for analysis, stored data, displayed data, etc.), and signals involved in this disclosure are all authorized by users or fully authorized by all parties, and the collection, use, and processing of relevant data must comply with relevant laws, regulations, and standards of relevant countries and regions.

Firstly, terms involved in the disclosure are explained and clarified.

Multicast broadcast service (MBS): the MBS may be marked through a MBS identifier.

In some embodiments, the MBS includes both a multicast service and a broadcast service.

For example, when the MBS includes the multicast service, in a case of a terminal entering a radio resource control (RRC) connection state, the terminal determines configuration information of the multicast service, and receives the MBS based on the configuration information.

Optionally, when the terminal switches from the connected state to an inactive state, the terminal may also receive an inactive multicast service, in which the inactive multicast service refers to a multicast service received by the terminal in the inactive state.

For example, when the MBS includes the broadcast service, the terminal may determine configuration information of the broadcast service in idle, inactive, or connected states, and receive the MBS based on the configuration information.

In some embodiments, the MBS identifier includes at least one of the following:
a temporary mobile group identity (TMGI);
a MBS session identification (ID); or
a MBS quality of service (QoS) flow ID.

Application scenarios of the disclosure will be explained below.

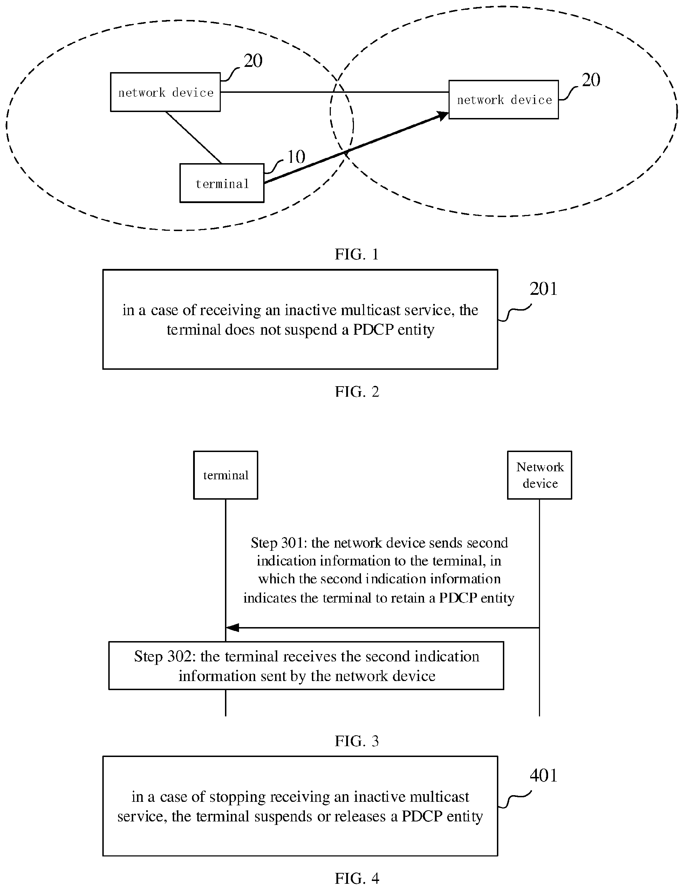

FIG. 1 shows a block diagram of a communication system according to an exemplary embodiment of the disclosure. The communication system may include a terminal 10 and a network device 20.

The number of terminals 10 is usually multiple, and one or more terminals 10 may be distributed within a cell managed by each network device 20. The terminal 10 may include various handheld devices with wireless communication capabilities, vehicle mounted devices, wearable devices, computing devices, or other processing devices connected to a wireless modem, as well as various forms of UE, mobile stations (MS), and so on. For the convenience of description, the devices mentioned above are collectively referred to as a terminal in the embodiments of the disclosure.

In some embodiments, the terminal 10 includes a packet data convergence protocol (PDCP) entity through which the terminal transmits the inactive multicast service.

The network device 20 is an apparatus deployed in an access network to provide a wireless communication function for the terminal 10. For the convenience of description, in the embodiments of the disclosure, the above apparatus that provides the wireless communication function for the terminal 10 is collectively referred to as a network device. The network device 20 and the terminal 10 may establish a connection through an air interface, and communicate with each other through the connection, which includes signaling and data exchange. There may be a plurality of network devices 20, and two adjacent network devices 20 may also communicate with each other through wired or wireless means. The terminal 10 may send a beam report between different network devices 20, that is, establish connections with different network devices 20.

The network device 20 may include various forms of macro base stations, micro base stations, relay stations, access points, and so on. In systems using different wireless access technologies, the names of devices with network device functions may be different, such as gNodeB or gNB in a 5G New Radio (NR) system. With the evolution of communication technology, the name "network device" may change.

The "5G NR system" in the embodiments of the disclosure may also be referred to as a 5G system or an NR system, but those skilled in the art may understand its meaning. The technical solution described in the embodiments of the disclosure may be applied to the 5G NR system, as well as to a subsequent evolution system of the 5G NR system.

FIG. 2 is a flowchart of a PDCP entity processing method according to an exemplary embodiment of the disclosure, for example, the method may be applied to the terminal and the network device as shown in FIG. 1. The method includes at least some of the following contents.

At step 201: the terminal does not suspend, in a case of receiving an inactive multicast service, a PDCP entity.

The inactive multicast service is a multicast service received by the terminal in a case where the terminal is in an inactive state.

In some embodiments, the PDCP entity includes a PDCP entity used for transmitting the inactive multicast service.

In this embodiment of the disclosure, when the terminal determines that the terminal needs to receive the inactive multicast service, the terminal may retain the PDCP entity used for transmitting the inactive multicast service, so that the terminal may transmit the inactive multicast service based on the PDCP entity.

In some embodiments, the terminal may receive the inactive multicast service sent by the network device based on the retained PDCP entity.

In some embodiments, the terminal retains the PDCP entity in the case of receiving the inactive multicast service, which may also be understood as the terminal not suspending the PDCP entity in the case of receiving the inactive multicast service. That is to say, in this embodiment of the disclosure, the terminal retaining the PDCP entity may be replaced with the terminal not suspending the PDCP entity.

It should be noted that in this embodiment of disclosure, the terminal determines to receive the inactive multicast service in the case where the terminal is in the inactive state.

This embodiment of the disclosure provides a solution for a terminal to process the PDCP entity, so that the terminal may still receive the inactive multicast service normally in a case where the terminal determines that the inactive multicast service is needed to be received. This not only ensures the transmission of the inactive multicast service, but also ensures a reliability of communication.

The embodiment shown in FIG. 2 explains under what circumstances the terminal needs to retain the PDCP entity. How the terminal retains the PDCP entity under specific circumstances.

In some embodiments, in a case where the terminal is configured to receive the inactive multicast service, it is determined to retain the PDCP entity. The terminal executing an inactive multicast broadcast service (INACTIVE MBS) includes the terminal being configured to perform INACTIVE MBS reception.

In this embodiment of the disclosure, the terminal may be configured to receive the inactive multicast service. In this case, the terminal determines that it needs to receive the inactive multicast service, and the terminal needs to receive the inactive multicast service based on the PDCP entity. Therefore, the terminal needs to retain the PDCP entity.

Optionally, the network devices may configure the terminal to receive the inactive multicast service through indication information. For example, the network device sends first indication information to the terminal, in which the first indication information is used to configure the terminal to receive the inactive multicast service. After receiving the first indication information, it is determined that the terminal is configured to receive the inactive multicast service.

As a possible implementation, the first indication information is borne in a radio resource control (RRC) release message carrying a suspended configuration. It may also be understood that the network device sends the RRC release message carrying the suspended configuration and carrying the first indication information to the terminal. The terminal receives the RRC release message carrying the suspension configuration sent by the network device, i.e. the terminal receives the first indication information.

It should be noted that in this embodiment of the disclosure, the terminal retains the PDCP entity in a case where the terminal is configured to perform the reception of the inactive multicast service, which may also be understood as the terminal retaining the PDCP entity in a case where the terminal receives the first indication information sent by the network device.

In other words, when the network device sends the first indication information to the terminal, the terminal may retain the PDCP entity after receiving the first indication information, so as to receive the inactive multicast service in the future.

In some embodiments, determining to retain the PDCP entity in a case where the terminal is configured to receive the inactive multicast service may also be understood as determining not to suspend the PDCP entity in the case where the terminal is configured to receive the inactive multicast service. That is to say, in this embodiment of the disclosure, determining to retain the PDCP entity in the case where the terminal is configured to receive the inactive multicast service may be replaced by determining not to suspend the PDCP entity in the case where the terminal is configured to receive the inactive multicast service.

Optionally, the terminal being configured to perform the reception of the inactive multicast service includes the terminal receiving a configuration indication of the inactive multicast service sent by the network device. As a possible implementation, when the terminal receives the INACTIVE MBS configuration indication send by the network device, the terminal does not suspend the PDCP entity. The configuration indication of the inactive multicast service may be understood as the first indication information in the embodiments of the disclosure.

In other embodiments, in a case where the terminal is configured to switch from a connected state to an inactive state, it is determined to retain the PDCP entity.

In this embodiment of the disclosure, the terminal may be in various states, such as connected state, idle state, or inactive state. When the terminal is in the connected state, the terminal may receive the multicast service. However, in some cases, the terminal may switch from the connected state to the inactive state. In this case, the terminal may receive the inactive multicast service, and the terminal may still retain the PDCP entity, so that the terminal may receive the inactive multicast service based on the PDCP entity.

Optionally, the network device may configure the terminal to switch from the connected state to the inactive state through indication information. For example, the network device sends first indication information to the terminal, in which the first indication information is configured to configure the terminal to switch from the connected state to the inactive state. After receiving the first indication information, it is determined that the terminal is configured to switch from the connected state to the inactive state.

As a possible implementation, the first indication information is borne in the RRC release message carrying the suspended configuration. It may also be understood that the network device sends the RRC release message carrying the suspended configuration and carrying the first indication information to the terminal. The terminal receives the RRC release message carrying the suspension configuration sent by the network device, i.e. the terminal receives the first indication information.

It should be noted that this embodiment of the disclosure is illustrated using the example of the first indication information sent by the network device having two functions. In another embodiment, the first indication information sent by the network device is actually configured for the network device to configure the terminal to switch from the connected state to the inactive state, and configure the terminal to receive the inactive multicast service when the terminal is in the inactive state. Therefore, the terminal determines that the PDCP entity is needed to be retained, in order to receive the inactive multicast service based on the PDCP entity.

In some embodiments, determining to retain the PDCP entity in the case where the terminal is configured to switch from the connected state to the inactive state may also be understood as determining not to suspend the PDCP entity in the case where the terminal is configured to switch from the connected state to the inactive state. That is to say, in this embodiment of the disclosure, determining to retain the PDCP entity in the case where the terminal is configured to switch from the connected state to the inactive state may be replaced by determining not to suspend the PDCP entity in the case where the terminal is configured to switch from the connected state to the inactive state.

Optionally, when the terminal receives the RRC release message and switches from the connected state to the inactive state, the PDCP entity is not suspended.

In other embodiments, in the case where the terminal is configured to receive the inactive multicast service, when the terminal switches from the connected state to the inactive state, it is determined to retain the PDCP entity.

In this embodiment of the disclosure, the terminal may be configured to receive the inactive multicast service. For such terminals, when switching from the connected state to the inactive state, the terminal determines that the PDCP entity needs to be retained.

Optionally, the network device may configure the terminal to receive the inactive multicast service through indication information, and the terminal will switch from the connected state to the inactive state based on the indication information. For example, the network device sends first indication information to the terminal, in which the first indication information is configured to configure the terminal to receive the inactive multicast service and also instructs the terminal to switch from the connected state to the inactive state. Therefore, after receiving the first indication information, it may be determined that the terminal is configured to receive the inactive multicast service and also needs to switch from the connected state to the inactive state.

As a possible implementation, the first indication information is borne in the RRC release message carrying the suspended configuration. It may also be understood that the network device sends the RRC release message carrying the suspended configuration and carrying the first indication information to the terminal. The terminal receives the RRC release message carrying the suspension configuration sent by the network device, i.e. the terminal receives the first indication information.

In some embodiments, in the case where the terminal is configured to receive the inactive multicast service, when the terminal switches from the connected state to the inactive state, determining to retain the PDCP entity may also be understood as in the case where the terminal is configured to receive the inactive multicast service, when the terminal switches from the connected state to the inactive state, determining not to suspend the PDCP entity. That is to say, in this embodiment of the disclosure, in the case where the terminal is configured to receive the inactive multicast service, when the terminal switches from the connected state to the inactive state, determining to retain the PDCP entity may be replaced with in the case where the terminal is configured to receive the inactive multicast service, when the terminal switches from the connected state to the inactive state, determining not to suspend the PDCP entity.

In the solution provided by this embodiment of the disclosure, the terminal determines to retain the PDCP entity based on the configured state, so as to receive the inactive multicast service based on the PDCP entity, which not only ensures the transmission of the inactive multicast service but also ensures the reliability of communication.

In some embodiments, the network device may also instruct the terminal to retain the PDCP entity. FIG. 3 shows a flowchart of a PDCP entity processing method according to exemplary embodiment of the disclosure. Referring to FIG. 3, the method includes the following steps.

At step 301, the network device sends second indication information to a terminal, in which the second indication information indicates the terminal to retain a PDCP entity.

At step 302: the terminal receives the second indication information sent by the network device.

In the embodiments of the disclosure, the network device may inform the terminal to retain the PDCP entity through the second indication information. Therefore, after the terminal receives the second indication information sent by the network device, the terminal may determine whether the PDCP entity needs to be retained.

In the solution provided in the embodiments of the disclosure, the network device instructs the terminal to retain the PDCP entity through indication information, therefore the inactive multicast service may be received based on the PDCP entity, which not only ensures the transmission of the inactive multicast services but also ensures the reliability of communication.

In some embodiments, the PDCP entity includes at least one of the following:
A sending PDCP entity, configured to process a data packet sent by the terminal to the network device.

A receiving PDCP entity, configured to process a data packet sent by the network device to the terminal.

As a possible implementation, the network device may indicate the PDCP entity retained by the terminal through third indication information.

Optionally, when the third indication information indicates the terminal to retain the sending PDCP entity, then after the network device sends the third indication information to the terminal, the terminal may determine to retain the sending PDCP entity based on the third indication information.

Optionally, when the third indication information indicates the terminal to retain the receiving PDCP entity, then after the network device sends the third indication information to the terminal, the terminal may determine to retain the receiving PDCP entity based on the third indication information.

Optionally, when the third indication information indicates the terminal to retain the sending PDCP entity and the receiving PDCP entity, then after the network device sends the third indication information to the terminal, the terminal may determine to retain the sending PDCP entity and the receiving PDCP entity based on the third indication information.

It should be noted that this embodiment of the disclosure is illustrated using the example of the network device indicating the PDCP entity retained by the terminal through the third indication information. In some embodiments, the second indication information and the third indication information sent by the network device are the same indication information, which means that indication information sent by the network device not only indicates that the terminal needs to retain the PDCP entity, but also further indicates the terminal to retain at least one of the sending PDCP entity or the receiving PDCP entity.

In other embodiments, the network device may not instruct the terminal to retain the PDCP entity, but the terminal may determine the retained PDCP entity according to a communication protocol agreement.

In some embodiments, when the communication protocol stipulates that the terminal retains the sending PDCP entity, then the terminal retains the sending PDCP entity.

Optionally, when the terminal determines that it needs to send the data packet of the inactive multicast service to the network device through the sending PDCP entity, the terminal determines that the sending PDCP entity needs to be retained according to the communication protocol.

In some embodiments, when the communication protocol stipulates that the terminal retains the receiving PDCP entity, then the terminal retains the receiving PDCP entity.

Optionally, when the terminal determines that it needs to receive the data packet of the inactive multicast service sent by the network device through the receiving PDCP entity, the terminal determines that the receiving PDCP entity needs to be retained according to the communication protocol.

In some embodiments, when the communication protocol stipulates that the terminal retains the sending PDCP entity and the receiving PDCP entity, the terminal retains the sending PDCP entity and the receiving PDCP entity.

Optionally, when the terminal determines that it needs to send the data packet of the inactive multicast service to the network device through the sending PDCP entity, and also needs to receive the data packet of the inactive multicast service sent by the network device through the receiving PDCP entity, the terminal determines that the sending PDCP entity and the receiving PDCP entity need to be retained according to the communication protocol.

In the solution provided by this embodiment of the disclosure, the terminal determines the PDCP entity that needs to be retained according to the communication protocol agreement, so as to receive the inactive multicast service based on the PDCP entity, which not only ensures the transmission of inactive multicast services, but also ensures the reliability of communication.

In some embodiments, the terminal retaining the sending PDCP entity may be understood as the terminal not suspending the sending PDCP entity, which means that the terminal retaining the sending PDCP entity may be replaced by the terminal not suspending the sending PDCP entity. The terminal retaining the receiving PDCP entity may be understood as the terminal not suspending the receiving PDCP entity, which means that the terminal retaining the receiving PDCP entity may be replaced by the terminal not suspending the receiving PDCP entity.

In addition, it should be noted that in a case where terminal needs to retain one PDCP entity in the sending PDCP entity and the receiving PDCP entity, the terminal needs to release or suspend another PDCP entity. That is to say, when the terminal determines to retain the sending PDCP entity, the terminal releases or suspends the receiving PDCP entity. Alternatively, when the terminal determines to retain the receiving PDCP entity, the terminal releases or suspends the sending PDCP entity. Alternatively,, when the terminal determines to retain the sending PDCP entity and the receiving PDCP entity, the terminal does not release or suspend any PDCP entity.

In the basis of the terminal needing to retain the PDCP entity according to the above embodiment, specific parameters of the PDCP entity retained by the terminal will be explained below.

In some embodiments, the terminal needs to retain at least one item, as follows, of the PDCP entity.
(1) Retaining a PDCP data packet of the PDCP entity.

In the embodiments of the disclosure, the PDCP entity corresponds to the PDCP data packet, and the terminal determines that the PDCP entity needs to be retained, the terminal retains the PDCP data packet of that PDCP entity.

In some embodiments, the terminal retains the PDCP data packet of the PDCP entity, which may be understood as that the terminal does not discard the PDCP data packet of the PDCP entity.

In some embodiments, the PDCP entity includes the receiving PDCP entity and the sending PDCP entity. The terminal retains the PDCP entity, which may be understood as the terminal retaining the receiving PDCP entity and the sending PDCP entity.

Optionally, the terminal retaining the PDCP entity may be understood as not suspending the PDCP entity. That is to say, the terminal does not suspend the receiving PDCP entity and does not suspend sending PDCP entity.

As a possible implementation, when the PDCP entity includes the sending PDCP entity, the terminal not suspending the PDCP entity includes the terminal not suspending the sending PDCP entity. Furthermore, the sending PDCP entity not be suspending includes the sending PDCP entity not discarding the PDCP data packet, which may also be understood as the terminal retaining a PDCP protocol data unit (PDU) data packet to be transmitted.

As a possible implementation, when the PDCP entity includes the receiving PDCP entity, the terminal not suspending the PDCP entity includes the terminal not suspending the receiving PDCP entity. Furthermore, not suspending the receiving PDCP entity includes the receiving PDCP entity not submitting a stored PDCP service data unit (SDU) data packets to a higher-layer, which may also be understood as the terminal retaining the PDCP SDU data packet.

(2) Retaining a PDCP state variable corresponding to the PDCP entity.

In the embodiments of the disclosure, when the PDCP entity also corresponds to the PDCP state variable, and in a case where the terminal determines that the PDCP entity needs to be retained, the terminal retains the PDCP state variable of the PDCP entity.

In some embodiments, the terminal retaining the PDCP state variable corresponding to the PDCP entity may also be understood as the terminal not initializing the PDCP state variable corresponding to the PDCP entity (i.e. retaining the corresponding PDCP state variable). That is to say, the terminal retaining the PDCP state variable corresponding to the PDCP entity may be replaced by the terminal not initializing the PDCP state variable corresponding to the PDCP entity.

Optionally, the PDCP entity includes the sending PDCP entity and the receiving PDCP entity, and for different PDCP entities, parameters of PDCP entities retained by the terminal are different.

In some embodiments, when the PDCP entity includes the sending PDCP entity, the PDCP state variable corresponding to the PDCP entity includes a count value (TX_CEXT) of the next transmitted PDCP SDU. That is to say, when the terminal needs to retain the sending PDCP entity, the terminal needs to retain the count value of the next transmitted PDCP SDU corresponding to the sending PDCP entity.

In some embodiments, not suspending PDCP includes not suspending the receiving PDCP entity, not executing PDCP suspension includes the receiving PDCP entity not submitting the stored PDCP SDU data packet to the higher-layer, and the receiving PDCP entity retaining the PDCP SDU data packet.

In other embodiments, when the PDCP includes the receiving PDCP entity, the PDCP state variable corresponding to the PDCP entity include at least one of a reordering timer, a count value (RX_CEXT)of the next received PDCP SDU, or a count value (RX_deLIV) of the first PDCP SDU submitted to the higher layer.

That is to say, when the terminal needs to retain the receiving PDCP entity, the terminal needs to retain at least one of the reordering timer corresponding to the receiving PDCP entity, the count value of the next received PDCP SDU, or the count value of the first PDCP SDU submitted to the higher layer.

In summary, when the PDCP entity includes the sending PDCP entity and the receiving PDCP entity, the terminal not suspending the PDCP entity is explained.

In some embodiments, when the terminal receives the inactive multicast service, the terminal does not suspend the sending PDCP entity but suspends the receiving PDCP entity. The sending PDCP entity does not discard the PDCP data packet, and the corresponding PDCP state variable will be retained. The receiving PDCP entity submits the PDCP data packet to the higher-layer and initializes the corresponding PDCP state variable.

In some embodiments, when the terminal receives the inactive multicast service, the terminal does not suspend the receiving PDCP entity but suspends the sending PDCP entity. The receiving PDCP entity does not submit the stored PDCP SDU data packets to the higher-layer, and the corresponding PDCP state variable will be retained accordingly. The sending PDCP entity discards the PDCP data packet and initializes the corresponding PDCP state variable.

In other embodiments, when the terminal performs the INACTIVE MBS reception, neither the sending PDCP entity nor the receiving PDCP entity performs initialization.

In the solution provided by this embodiment of the disclosure, the terminal determines the parameters that need to be retained based on the type of PDCP entity retained, so that the terminal may transmit the inactive multicast service based on the parameters corresponding to the retained PDCP entity, thereby ensuring the reliability of transmission.

FIG. 4 shows a flowchart of a PDCP entity processing method according to an exemplary embodiment of the disclosure, for example, the method may be applied to the terminal and the network device as shown in FIG. 1. The method includes at least some of the following contents.

At step 401: in a case of stopping receiving an inactive multicast service, the terminal suspends or releases a PDCP entity.

The inactive multicast service is the multicast service received by the terminal in an inactive state. The terminal stops receiving INACTIVE MBS, including the terminal moving out of a service area of the INACTIVE MBS.

In some embodiments, the PDCP entity includes a PDCP entity used for transmitting the inactive multicast service. In this embodiment of the disclosure, when the terminal determines that it needs to stop receiving the inactive multicast service, the terminal may suspend or release the PDCP entity used for transmitting the inactive multicast service, so that the terminal may stop transmitting the inactive multicast service based on the PDCP entity.

It should be noted that in this embodiment of the disclosure, the terminal determines to stop receiving the inactive multicast service when the terminal is in the inactive state.

In some embodiments, the terminal releases or suspends the PDCP entity, which means to perform different steps based on different conditions.

Optionally, the terminal releases the PDCP entity in response to the terminal releasing an inactive multicast service configuration and/or a radio bearer.

In the embodiments of the disclosure, the terminal itself may determine that the inactive multicast service configuration and/or the radio bearer needs to be released, then in this case, the terminal releases the PDCP entity.

For example, the network device may configure the terminal to release the inactive multicast service configuration and/or the radio bearer through configuration information. After receiving this configuration information, the terminal determines that the inactive multicast service configuration and/or the radio bearer needs to be released, then in this case, the terminal releases the PDCP entity.

For example, the terminal determines that the inactive multicast service configuration and/or the radio bearer needs to be released based on the communication protocol, then in this case, the terminal releases the PDCP entity.

Optionally, the terminal suspends the PDCP entity in response to the terminal suspending the inactive multicast service configuration and/or the radio bearer.

In the embodiments of the disclosure, the terminal itself may determine that the inactive multicast service configuration and/or the radio bearer needs to be suspends, then in this case, the terminal suspends the PDCP entity.

For example, the network device may configure the terminal to suspend the inactive multicast service configuration and/or the radio bearer through configuration information. After receiving the configuration information, the terminal determines that the inactive multicast service configuration and/or the radio bearer needs to be suspended. In this case, the terminal suspends the PDCP entity.

For example, the terminal determines that the inactive multicast service configuration and/or the radio bearer needs to be suspended based on the communication protocol, then in this case, the terminal suspends the PDCP entity.

In the solution provided by this embodiment of the disclosure, the terminal determines whether to release or suspend the PDCP entity in response to releasing or suspending the inactive multicast service configuration and/or the radio bearer, ensuring the reliability of transmission.

In some embodiments, in a case where a current resident cell does not support the inactive multicast service, it is determined to suspend or release the PDCP entity.

In the embodiments of the disclosure, there are two cases that the current resident cell of the terminal currently resides supports the inactive multicast service and does not support the inactive multicast service. In the case where the current resident cell does not support the inactive multicast service, the terminal does not need to transmit the inactive multicast service based on the PDCP entity. Therefore, in this case, the terminal determines to suspend or release the PDCP entity.

It should be noted that this embodiment of this disclosure is illustrated using the example of the terminal suspending or releasing the PDCP entity. Suspending or releasing the PDCP entity includes at least one of the following contents.
(1) Sending a PDCP data packet of the PDCP entities to a higher-layer.
   In the embodiments of the disclosure, the PDCP entity corresponds to the PDCP data packet, and in a case where the terminal determines that the PDCP entity needs to be suspended or released, the terminal sends the PDCP data packet of the PDCP entity to the higher-layer.
(2) Initializing a PDCP state variable corresponding to the PDCP entity.

In the embodiments of the disclosure, the PDCP entity also corresponds to the PDCP state variable, and in a case where the terminal determines that the PDCP entity needs to be suspended or released, the terminal initializes the PDCP state variable of the PDCP entity.

Optionally, the PDCP entity includes the sending PDCP entity and the receiving PDCP entity, and for different PDCP entities, parameters of PDCP entities retained by the terminal are different.

Optionally, the PDCP entity includes a sending PDCP entity, and a PDCP state variable corresponding to the sending PDCP entity includes a count value of a next transmitted PDCP SDU. That is to say, when the terminal needs to suspend or release the sending PDCP entity, the terminal needs to initialize the count value of the next transmitted PDCP SDU corresponding to the sending PDCP entity.

Optionally, the PDCP entity includes a receiving PDCP entity, and a PDCP state variable corresponding to the receiving PDCP entity includes at least one of:
a reordering timer;
a count value of a next received PDCP SDU; or
a count value of the first PDCP SDU submitted to the higher-layer.

That is to say, when the terminal needs to release or suspend the receiving PDCP entity, the terminal needs to initialize at least one of the reordering timer corresponding to the receiving PDCP entity, the count value of the next received PDCP SDU, or the count value of the first PDCP SDU submitted to the higher layer.

In the solution provided by the embodiments of the disclosure, the terminal determines the parameters that need to be reset based on the type of released or suspended PDCP entity, so that the terminal may stop transmitting the inactive multicast service according to the parameters corresponding to the suspended or released PDCP entity, thereby ensuring the reliability of transmission.

It should be noted that the above embodiments may be divided into new embodiments, or combined with other embodiments to form new embodiments. The disclosure does not limit the combination between embodiments.

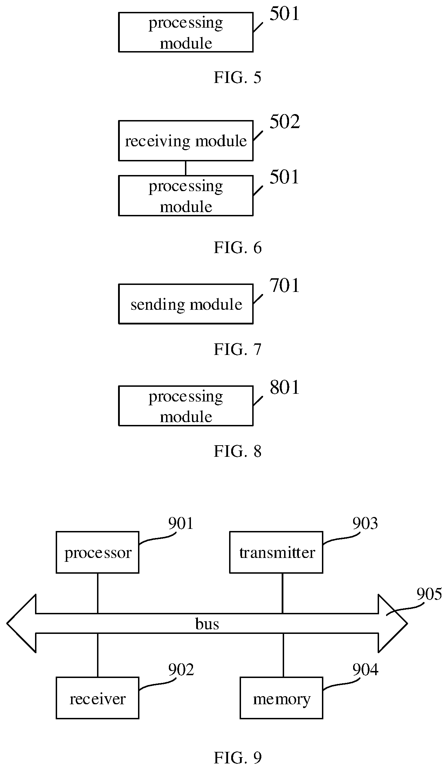

FIG. 5 shows a block diagram of a PDCP entity processing apparatus according to an exemplary embodiment of the disclosure. Referring to FIG. 5, the apparatus includes:
a processing module 501, configured to withhold suspending, in a case of receiving an inactive multicast service, a PDCP entity.

In some embodiments, the PDCP entity includes a PDCP entity used for transmitting the inactive multicast service.

In some embodiments, the processing module 501 is further configured to:
determine, in a case where the terminal is configured to receive the inactive multicast service, to retain the PDCP entity;
   or,
determine, in a case where the terminal is configured to switch from a connected state to an inactive state, to retain the PDCP entity.

In some embodiments, referring to FIG. 6, the apparatus further includes:
a receiving module 502, configured to receive first indication information sent by a network device, in which the first indication information is used for configuring the terminal to receive the inactive multicast service and/or to switch from the connected state to the inactive state.

In some embodiments, the first indication information is borne in an RRC release message carrying a suspended configuration.

In some embodiments, referring to FIG. 6, the apparatus further includes:
a receiving module 502, configured to receive second indication information sent by a network device, in which the second indication information indicates the terminal to retain the PDCP entity.

In some embodiments, the processing module 501 is further configured to:
retain a PDCP data packet of the PDCP entity; or
retain a PDCP state variable corresponding to the PDCP entity.

In some embodiments, the PDCP entity includes a sending PDCP entity, and a PDCP state variable corresponding to the sending PDCP entity includes a count value of a next transmitted PDCP SDU.

In some embodiments, the PDCP entity includes a receiving PDCP entity, and a PDCP state variable corresponding to the receiving PDCP entity includes at least one of:
a reordering timer;
a count value of a next received PDCP SDU; or
a count value of the first PDCP SDU submitted to a higher-layer.

It should be noted that the apparatus provided in the above embodiment, when implementing its functions, only provides examples of the division of the above functional modules. In practical applications, the above functions may be assigned to different functional modules to implement as needed, that is, the internal structure of the device may be divided into different functional modules to complete all or part of the functions described above. In addition, the apparatus provided in the above embodiment belongs to the same concept with and the above method embodiments, and the specific implementation process is detailed in the method embodiments, which will not be repeated here.

FIG. 7 shows a block diagram of an information transmission apparatus according to an exemplary embodiment of the disclosure. Referring to FIG. 7, the apparatus includes:
a sending module 701, configured to send first indication information to a terminal, in which the first indication information is used for configuring the terminal to receive an inactive multicast service and/or to switch from a connected state to an inactive state.

In some embodiments, the first indication information is borne in an RRC release message carrying a suspended configuration.

In some embodiments, the sending module 701 is further configured to send second indication information to the terminal, in which the second indication information indicates the terminal to retain a PDCP entity, and the PDCP entity includes a PDCP entity used for transmitting the inactive multicast service.

It should be noted that the apparatus provided in the above embodiment, when implementing its functions, only provides examples of the division of the above functional modules. In practical applications, the above functions may be assigned to different functional modules to implement as needed, that is, the internal structure of the device may be divided into different functional modules to complete all or part of the functions described above. In addition, the apparatus provided in the above embodiment belongs to the same concept with and the above method embodiments, and the specific implementation process is detailed in the method embodiments, which will not be repeated here.

FIG. 8 shows a block diagram of a PDCP entity processing apparatus according to an exemplary embodiment of the disclosure. Referring to FIG. 8, the apparatus includes:
a processing module 801, configured to suspend or release, in a case of stopping receiving an inactive multicast service, a PDCP entity.

In some embodiments, the PDCP entity comprises a PDCP entity used for transmitting the inactive multicast service.

In some embodiments, the processing module 801 is further configured to:
release, in response to the terminal releasing an inactive multicast service configuration and/or a radio bearer, the PDCP entity;
   or,
suspend, in response to the terminal suspending an inactive multicast service configuration and/or a radio bearer, the PDCP entity.

In some embodiments, the processing module 801 is further configured to: determine, in a case where a current resident cell does not support the inactive multicast service, to suspend or release the PDCP entity.

In some embodiments, the processing module 801 is further configured to:
send a PDCP data packet of the PDCP entity to a higher-layer; and/or,
initialize a PDCP state variable corresponding to the PDCP entity.

In some embodiments, the PDCP entity includes a sending PDCP entity, and a PDCP state variable corresponding to the sending PDCP entity comprises a count value of a next transmitted PDCP SDU.

In some embodiments, the PDCP entity includes a receiving PDCP entity, and a PDCP state variable corresponding to the receiving PDCP entity includes at least one of:
a reordering timer;
a count value of a next received PDCP SDU; or
a count value of the first PDCP SDU submitted to the higher-layer.

It should be noted that the apparatus provided in the above embodiment, when implementing its functions, only provides examples of the division of the above functional modules. In practical applications, the above functions may be assigned to different functional modules to implement as needed, that is, the internal structure of the device may be divided into different functional modules to complete all or part of the functions described above. In addition, the apparatus provided in the above embodiment belongs to the same concept with and the above method embodiments, and the specific implementation process is detailed in the method embodiments, which will not be repeated here.

FIG. 9 shows a block diagram of a communication device according to an exemplary embodiment of the disclosure. The communication device includes: a processor 901, a receiver 902, a transmitter 903, a memory 904, and a bus 905.

The processor 901 includes one or more processing cores, and the processor 901 execute various functional applications and information processing by running software programs and modules.

The receiver 902 and transmitter 903 may be implemented as a communication component, which may be a communication chip.

The memory 904 is connected to the processor 901 through the bus 905.

The memory 904 may be configured to store at least one program code, and the processor 901 is configured to execute the at least one program code to implement the steps in the above method embodiments.

In addition, the communication device may be a terminal or a network device. The memory 904 may be implemented by any type of volatile or non-volatile storage device or combination thereof, which includes but not limited to: a magnetic or an optical disk, an electrically erasable programmable read-only memory (EEPROM), an erasable programmable read-only memory (EPROM), a static ready to access memory (SRAM), a read-only memory (ROM), a magnetic memory, a flash memory, a programmable read-only memory (PROM).

In an exemplary embodiment, a computer-readable storage medium is also provided, which stores executable program code that is loaded and executed by a processor to implement the PDCP entity processing method or the information transmission method, according to the method embodiments described above, executed by the communication device.

In an exemplary embodiment, a chip is provided that includes programmable logic circuits and/or program instructions. When the chip runs on a terminal or network device, the chip is configured to implement the PDCP entity processing method or the information transmission method provided in the method embodiments.

In an exemplary embodiment, a communication system is provided, which includes a terminal and a network device. The terminal is configured to implement the PDCP entity processing method as described above, and the network device is configured to implement the information transmission method as described above.

In an exemplary embodiment, a computer program product is provided that, when executed by a processor of a terminal or network device, is configured to implement the PDCP entity processing method or the information transmission method provided by the method embodiments described above.

Those skilled in the art may understand that all or part of the steps to implement the above embodiments may be completed by hardware, or by instructing relevant hardware through programs. The programs may be stored in a computer-readable storage medium, such as read-only memory, magnetic disk, or optical disk.

The above description is only optional embodiments of the disclosure and is not intended to limit the disclosure. Any modifications, equivalent substitutions, improvements, etc. made within the spirit and principles of the disclosure should be included in the scope of protection of the disclosure.

## Claims

1. A packet data convergence protocol (PDCP) entity processing method, performed by a terminal, comprising:
in a case of receiving an inactive multicast service, withholding suspending a PDCP entity.

2. The method of claim 1, wherein the PDCP entity comprises a PDCP entity used for transmitting the inactive multicast service.

3. The method of claim 1, further comprising at least one of:
in a case where the terminal is configured to receive the inactive multicast service, withholding suspending the PDCP entity;
or,
in a case where the terminal is configured to switch from a connected state to an inactive state, withholding suspending the PDCP entity.

4. The method of claim 3, further comprising:
receiving first indication information sent by a network device, wherein the first indication information is configured for the terminal to receive the inactive multicast service and/or switch from the connected state to the inactive state.

5. The method of claim 4, wherein the first indication information is borne in a radio resource control (RRC) release message carrying a suspended configuration.

6. The method of claim 1, further comprising:
receiving second indication information sent by a network device, wherein the second indication information indicates the terminal to retain the PDCP entity.

7. The method of any one of claims 1-6, wherein withholding suspending the PDCP entity comprises at least one of:
retaining a PDCP data packet of the PDCP entity; or
retaining a PDCP state variable corresponding to the PDCP entity.

8. The method of claim 7, wherein the PDCP entity comprises a sending PDCP entity, and a PDCP state variable corresponding to the sending PDCP entity comprises a count value of a next transmitted PDCP service data unit (SDU).

9. The method of claim 7, wherein the PDCP entity comprises a receiving PDCP entity, and a PDCP state variable corresponding to the receiving PDCP entity comprises at least one of:
a reordering timer;
a count value of a next received PDCP SDU; or
a count value of the first PDCP SDU submitted to a higher-layer.

10. An information sending method, comprising:
sending first indication information to a terminal, wherein the first indication information is used for configuring the terminal to receive an inactive multicast service and/or to switch from a connected state to an inactive state.

11. The method of claim 10, wherein the first indication information is borne in a radio resource control (RRC) release message carrying a suspended configuration.

12. The method of claim 10, further comprising:
sending second indication information to the terminal, wherein the second indication information indicates the terminal to retain a packet data convergence protocol (PDCP) entity, and the PDCP entity comprises a PDCP entity used for transmitting the inactive multicast service.

13. A packet data convergence protocol (PDCP) entity processing method, performed by a terminal, comprising:
in a case of stopping receiving an inactive multicast service, suspending or releasing a PDCP entity.

14. The method of claim 13, wherein the PDCP entity comprises a PDCP entity used for transmitting the inactive multicast service.

15. The method of claim 14, wherein in the case of stopping receiving the inactive multicast service, suspending or releasing the PDCP entity comprises:
in response to the terminal releasing an inactive multicast service configuration and/or a radio bearer, releasing the PDCP entity;
or,
in response to the terminal suspending an inactive multicast service configuration and/or a radio bearer, suspending the PDCP entity.

16. The method of claim 14, further comprising:
in a case where a current resident cell does not support the inactive multicast service, determining to suspend or release the PDCP entity.

17. The method of any one of claims 14-16, wherein suspending or releasing the PDCP entity comprises at least one of:
sending a PDCP data packet of the PDCP entity to a higher-layer; or
initializing a PDCP state variable corresponding to the PDCP entity.

18. The method of claim 17, wherein the PDCP entity comprises a sending PDCP entity, and a PDCP state variable corresponding to the sending PDCP entity comprises a count value of a next transmitted PDCP service data unit (SDU).

19. The method of claim 17, wherein the PDCP entity comprises a receiving PDCP entity, and a PDCP state variable corresponding to the receiving PDCP entity comprises at least one of:
a reordering timer;
a count value of a next received PDCP SDU; or
a count value of the first PDCP SDU submitted to the higher-layer.

20. A packet data convergence protocol (PDCP) entity processing apparatus, comprising:
a processing module, configured to withhold suspending, in a case of receiving an inactive multicast service, a PDCP entity.

21. An information sending apparatus, comprising:
a sending module, configured to send first indication information to a terminal, wherein the first indication information is used for configuring the terminal to receive an inactive multicast service and/or to switch from a connected state to an inactive state.

22. A packet data convergence protocol (PDCP) entity processing apparatus, comprising:
a processing module, configured to suspend or release, in a case of stopping receiving an inactive multicast service, a PDCP entity.

23. A terminal, comprising:
a processor; and
a transceiver connected to the processor;
wherein the processor is configured to load and execute executable instructions to implement the packet data convergence protocol (PDCP) entity processing method according to any one of claims 1 to 9, or to implement the PDCP entity processing method according to any one of claims 13 to 19.

24. A network device, comprising:
a processor; and
a transceiver connected to the processor;
wherein the processor is configured to load and execute executable instructions to implement the information sending method according to any one of claims 10 to 12.

25. A communication system, comprising a terminal and a network device, wherein the terminal is configured to implement the packet data convergence protocol (PDCP) entity processing method according to any one of claims 1 to 9, or to implement the PDCP entity processing method according to any one of claims 13 to 19, and the network device is configured to implement the information sending method according to any one of claims 10 to 12.

26. A computer-readable storage medium storing an executable program code, wherein the executable program code is loaded and executed by a processor to implement the packet data convergence protocol (PDCP) entity processing method according to any one of claims 1 to 9, or to implement the PDCP entity processing method according to any one of claims 13 to 19, or to implement the information transmission method according to any one of claims 10 to 12.
